# EUROPÄISCHE PATENTANMELDUNG

(11) **EP 0 572 861 A1**
(43) Veröffentlichungstag der Anmeldung: **08.12.1993**
(21) Anmeldenummer: 93108078.2
(22) Anmeldetag: 18.05.1993
(51) Int. Cl.: B23P 19/08, B23P 19/00, B65G 47/14

(54) **Vorrichtung zum Vereinzeln und Fördern elastischer Ringe**

(30) Priorität: 30.05.1992 DE 4217946
(71) Anmelder: OHRMANN GmbH Montagetechnik, W-4773 Möhnesee-Wippringsen (DE)
(72) Erfinder: Ohrmann, Cölestin, Dipl.-Ing., W-4773 Möhnesee (DE)
(74) Vertreter: Mey, Klaus-Peter, Dr.-Ing. Dipl.-Wirt.-Ing.

(57) **Zusammenfassung**

Die Erfindung betrifft eine Vorrichtung zum Vereinzeln und Fördern elastischer Ringe (25), insbesondere gummielastischer Dichtringe von einer Aufnahme- (30) zu einer Abgabestation (22). Bei der erfindungsgemäßen Vorrichtung, die sich durch einen besonders unkomplizierten und übersichtlichen Aufbau sowie durch ein Höchstmaß an Funktionssicherheit auszeichnet, weist die Aufnahmestation (30) eine Vorratstrommel (11) sowie eine Austragskammer (12) mit Vereinzelungsrampe (1) auf, mit der eine Transporteinrichtung (31) mit einer endlosen, um Antriebs- und Umlenkrollen (18) geführten Schleppkettenbahn (15) in Wirkverbindung steht, die mit einer Mitnehmerstifte bzw. Pinne führenden Schleppkette versehen ist, wobei im Verlauf der Schleppkettenbahn (15) ein oder mehrere Kontroll-Abfragestationen (4, 7, 8) zur Kontrolle der vereinzelt transportierten Ringe (25) vorgesehen sind. Vorzugsweise sind am oberen Ende der Rampe (1) eine quer dazu verlaufende Lichtschranke (2) und ein von dieser aktivierbarer Abwerfer (3) angeordnet.

## Beschreibung

Die Erfindung betrifft eine Vorrichtung zum Vereinzeln und Fördern von ringförmigen Werkstücken, insbesondere elastischen Ringen wie gummielastischen Dichtringen, von einer Aufnahme- zu einer Abgabestation.

Es sind Vorrichtungen zum Zusammensetzen einzelner oder mehrerer Teile zu Baugruppen bekannt, wobei diese einem Vorrat entnommen und nach Vereinzelung einer Montagestation zur Weiterverarbeitung angeliefert werden. Je nach der zu lösenden Aufgabe wurden zur Handhabung und zum Anreichen von Bauteilen, wie Schrauben oder kleineren Baugruppen, beispielsweise Roboter eingesetzt. Eine solche Maßnahme ist jedoch nur bei hoher Produktivität wirtschaftlich vertretbar. Im Gegensatz zur Handhabung von festen Werkstücken ist eine Vereinzelung elastischer Ringe vergleichsweise problematisch, weil diese nicht formstabil und daher ungleich schwieriger zu handhaben sind. Diese Schwierigkeiten werden noch vergrößert, wenn die ringförmigen Werkstücke ölig oder fettig sind.

Aus der DE-OS 27 57 077 ist eine Einrichtung zum Montieren gummielastischer Ringe an einem Gegenstand bekannt, wobei die Vereinzelung und Förderung der Ringe aus einer Schöpftrommel an Haken erfolgt, die die Ringe zu einer im oberen Bereich der Trommel gelegenen Abgabestelle bringen, von der sie abgefördert werden. Nachteilig ist der außerordentlich komplizierte Aufbau dieser Einrichtung aus einer Vielzahl bewegter Teile. Die Einrichtung ist sehr aufwendig in Herstellung und Wartung, und es kommt hinzu, daß sie jeweils nur für eine einzige Dimension solcher Ringe verwendet werden kann. Diese Nachteile schränken den Einsatz der Einrichtung erheblich ein.

Der Erfindung liegt die Aufgabe zugrunde, eine Vorrichtung zum Vereinzeln und Fördern ringförmiger Werkstücke, insbesondere elastischer Ringe wie gummielastischer Dichtringe, von einer Aufnahme- zu einer Abgabestation anzugeben, die möglichst unkompliziert im Aufbau ist, im praktischen Betrieb wartungsfrei arbeitet und dabei durch gezielten Einsatz von Kontrollstellen im Funktionsablauf Fehler sicher vermeidet. Die Zuführ- und Vereinzelungseinrichtung soll ohne Umrüstarbeiten für Ringe mit unterschiedlichen Durchmessern bzw. Schnurstärken eingesetzt werden können. Die Möglichkeit, geölte bzw. gefettete Werkstücke zuzuführen und zu vereinzeln soll ebenfalls gegeben sein.

Die Lösung dieser Aufgabe gelingt bei einer Vorrichtung der eingangs genannten Art mit der Erfindung durch eine Ausgestaltung entsprechend den Merkmalen von Anspruch 1.

Die erfindungsgemäße Vorrichtung umfaßt im wesentlichen eine Aufnahmestation mit einer rotierend antreibbaren, beidseits offenen Vorratstrommel, an die sich eine Austragskammer mit einem Führungsschlitz in der Rückwand anschließt. Durch diesen werden von einer Transporteinrichtung, beispielsweise einer Schleppkette abstehende Mitnehmerstifte hindurchgeführt, an deren Spitzen zunächst ein oder mehrere ringförmige Werkstücke hängen bleiben. Beim überfahren einer Abstreiframpe bleibt auf der Spitze eines jeden Mitnehmerstifts nur noch Platz für einen einzelnen Ring. Dieser wird mit der Transporteinrichtung durch die Schleppkettenbahn weitergefördert und beim Passieren von ein oder mehreren Kontrollstationen nur dann bis zur Abgabestation mitgenommen, wenn er einzeln und in richtiger Lage transportiert wird. Doppelt liegende Ringe oder verdrehte bzw. beschädigte Teile werden von Kontrollstationen mittels einer Kontrolleinrichtung, z. B. Lichtschranke und/oder Dickensensor, erfaßt und durch Auswerfer bzw. Ausblasdüsen aus der Schleppkettenbahn in Auffangbehälter abgeworfen.

Weitere Ausgestaltungen der Vorrichtung sind entsprechend den Unteransprüchen vorgesehen.

Die Erfindung wird in schematischen Zeichnungen in einer bevorzugten Ausführungsform gezeigt, wobei aus der nachstehenden Erläuterung einer in der Zeichnung beispielhaft dargestellten Ausführung weitere Einzelheiten, Merkmale und Vorteile der Erfindung entnehmbar sind.

Es zeigen:
- Fig. 1: eine Seitenansicht der erfindungsgemäßen Vorrichtung,
- Fig. 2: eine Seitenansicht der Aufnahmestation der Vorrichtung, teilweise im Schnitt,
- Fig. 3: eine Ansicht eines Teils der Aufnahmestation aus der Ansichtsebene III-III in Fig. 2,
- Fig. 4: die Transporteinrichtung, z. B. in einer Ausführung als Schleppkettenbahn im Querschnitt,
- Fig. 5: eine Draufsicht auf eine Kontrollstation mit Dickensensor, Vertikalschieber und Blasdüsen.

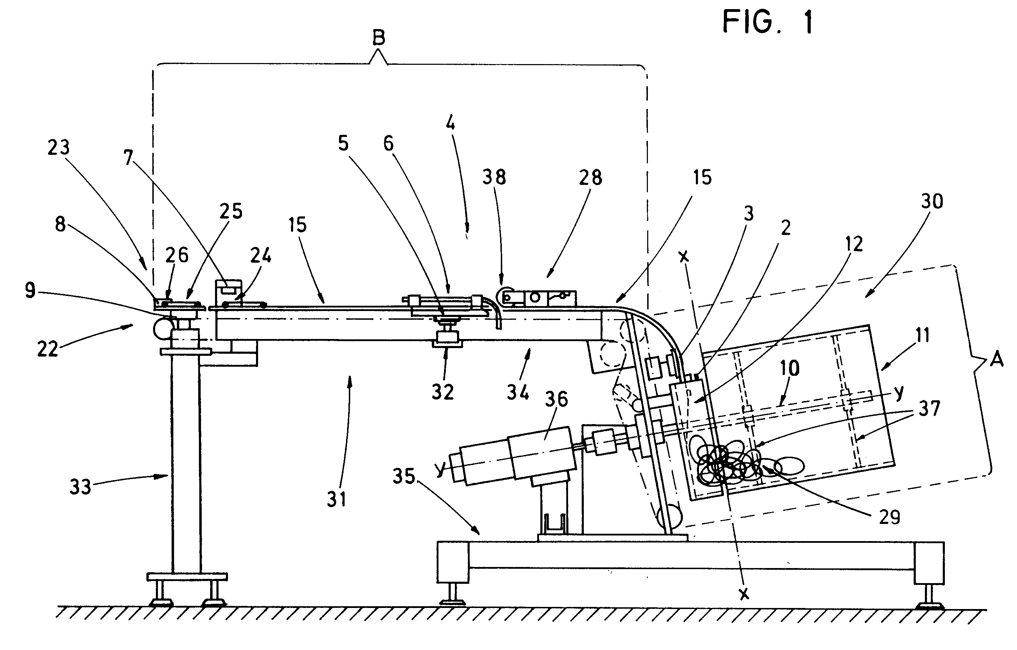

Die in Figur 1 gezeigte Vorrichtung zum Vereinzeln und Fördern elastischer ringförmiger Werkstücke, insbesondere Ringe wie gummielastische Dichtringe (25), besitzt im wesentlichen eine Aufnahmestation (30) und eine daran anschließende Förder- bzw. Transporteinrichtung (31).

Die Transporteinrichtung (31) umfaßt einen ersten parallel zur Ebene (x-x) aufwärtsgerichteten Abschnitt (A) einer Transporteinrichtung wie Schleppkettenbahn (15) sowie einen zweiten, in beliebiger Richtung, z. B. horizontal verlaufenden Abschnitt (B). An Umkehrende (23) der Bahn (15) befindet sich eine Abgabestation (22). Dieser ist eine Vereinzelungsbaugruppe (9) zugeordnet.

Die Aufnahmestation (30) umfaßt eine um eine schrägabwärts geneigte Weile (10) rotierende, beidseits offene Vorratstrommel (11). Prinzipiell kann die Trommel (11) auch außen gelagert und z. B. über einen Reibantrieb angetrieben werden. Die im Ausführungsbeispiel gezeigte Trommel (11) ist mittels Speichen (37) an einer Welle (10) befestigt. Die Speichen (37) haben zugleich die Funktion, das Haufwerk (29) der Ringe (25) bei der Trommelumdrehung durcheinander zu rühren und damit aufzulockern. An die Austragsseite der Trommel (11) schließt sich an deren zur Welle (10) senkrechten Ebene (x-x) eine nach oben offene Austragskammer (12) an. Diese ist mit einer Rückwand (14) abgeschlossen, welche von einem Führungsschlitz (13) durchbrochen ist. Im oberen Bereich der Rückwand (14) ist beidseitig des Führungsschlitzes (13) eine in Transportrichtung von unten nach oben stetig vorspringende Vereinzelungsrampe (1) angeordnet. Am Ende der Rampe (1) befindet sich eine quer zu dieser verlaufende Kontroll-Einrichtung, z. B. eine Lichtschranke (2), sowie ein von dieser aktivierbarer Abwerfer (3). Der schematisch dargestellte Abwerfer (3) kann entsprechend den abzuwerfenden Werkstücken (25) eine beliebig vorgegebene Form und Größe aufweisen.

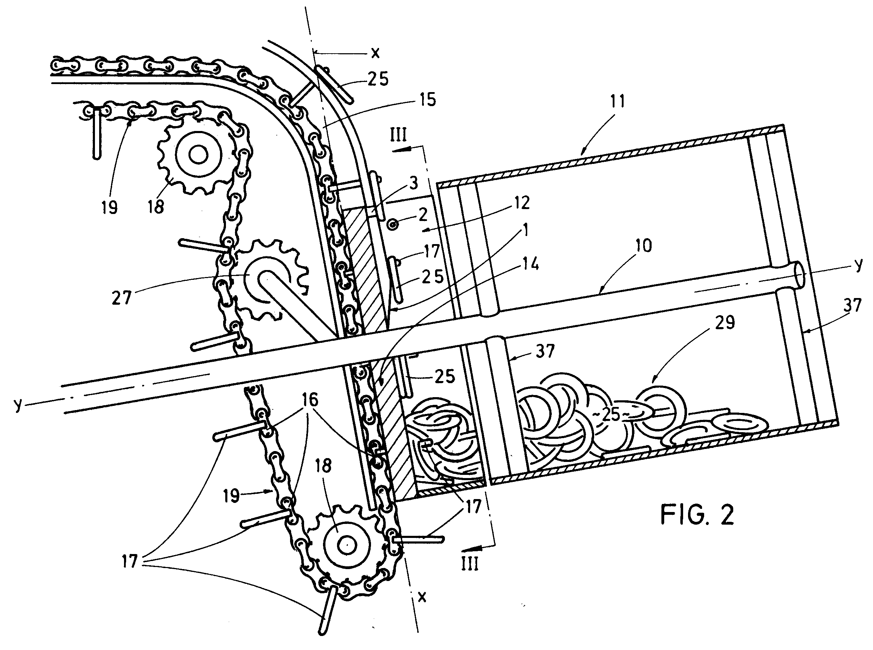

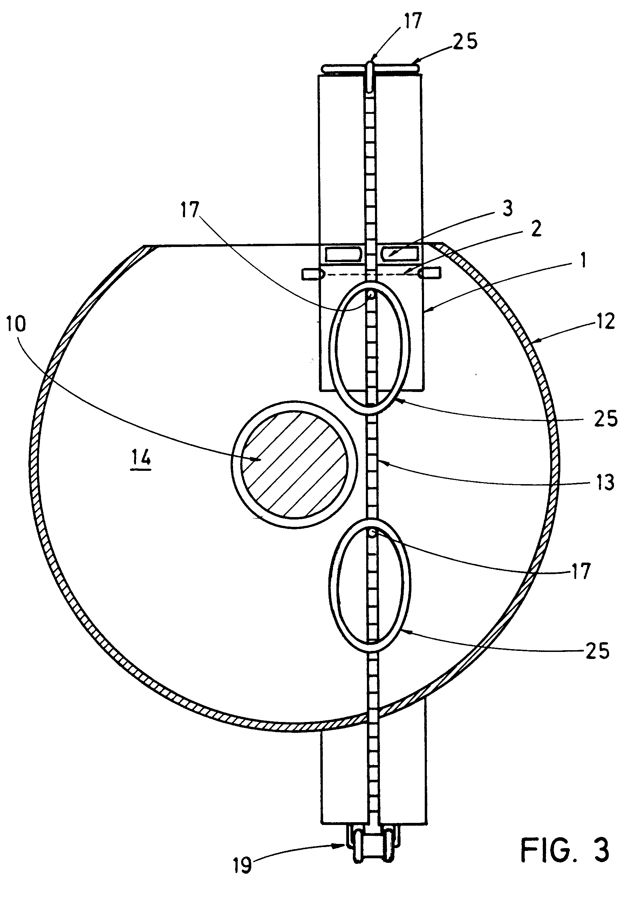

Das Zusammenwirken der Elemente der Aufnahmestation (30) ist aus der Zusammenschau der Figuren 1 bis 4 ersichtlich. In der Vorratstrommel (11) befindet sich ein ungeordnetes Haufwerk (29) eines Vorrates von ringförmigen Werkstücken (25), beispielsweise O-Ringen. Während sich die Trommel (11) um eine schräg-geneigte Rotations-Achse (y-y) dreht, wird das Haufwerk (29) unter Durchmischung durch die Speichen (37) in Richtung der Austragskammer (12) gegen deren Rückwand (14) gefördert. Die Rückwand (14) ist von einem Führungsschlitz (13) durchbrochen, durch welchen von einer Transporteinrichtung, beispielsweise einer Schleppkette (19) in einer Transportbahn (15) Mitnehmerstifte bzw. sogenannte Pinne (17) in gleichen Abständen senkrecht abstehend hindurchgeführt werden. Beim Hindurchwandern der Pinne (17) durch das Haufwerk (29) nehmen diese im unteren Bereich der Austragskammer (12) zunächst wahllos einen oder mehrere Ringe (25) auf. Bei ihrer Aufwärtsbewegung durch den Führungsschlitz (13) gelangen die Pinne (17) mit einem oder mehreren Ringen (25) beladen in den Bereich der Vereinzelungsrampe (1). Dabei verkürzt sich der relative überstand (Ü) der Pinne (17) soweit, daß im allgemeinen nur noch ein einzelner Ring (25) auf dessen Spitze liegen bleibt, wie dies in der Figur 2 gezeigt ist. Zur Kontrolle der so erreichten Vereinzelung ist als Kontrolleinrichtung z. B. die Lichtschranke (2) vorgesehen. Sollten beispielsweise zwei ineinanderhängende Ringe (25) auf einem Pin (17) transportiert werden, dann tritt der Abwerfer (3) nach Signalgabe der Lichtschranke (2) in Funktion und wirft die Ringe (25) ab.

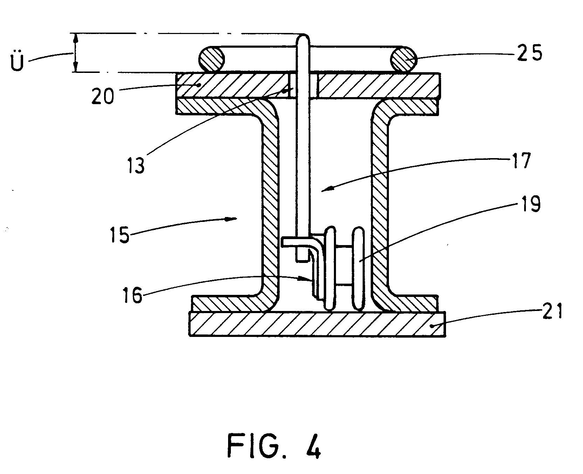

In Figur 4 ist ein Querschnitt durch die Transportbahn (15) gezeigt. An deren Oberseite befindet sich eine Schlitzführung (20) mit einem Führungsschlitz (13). Durch diesen wird der an einem Kettenglied (16) befestigte Pin (17) mit exakt definiertem Überstand (Ü) hindurchtretend geführt. Dieser Überstand (Ü) ist geringfügig größer als die Breite des Ringes (25). Die Einhaltung des Überstandes (Ü) wird dadurch kontrolliert, daß das Obertrum der Kette (19) im exakten Abstand von der Schlitzführung (20) auf einer Schienenunterlage (21) geführt ist. Der Überstand (Ü) muß zwingend nur im Bereich der Rampe (1) genau eingehalten werden.

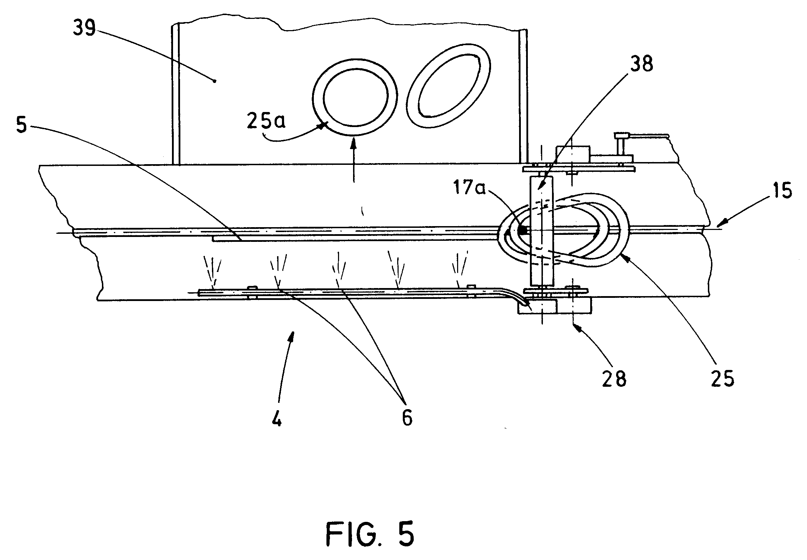

Innerhalb des Bahnabschnittes (B) der Transportbahn (15) ist gemäß Figur 1 eine Kontroll-Abfragestation (4) mit zugeordnetem Vertikalschieber (5) und Blasdüsen (6) zum Ausscheiden von doppelt liegenden Ringen (25) vorgesehen. Wie hierzu die Draufsicht der Figur 5 in vergrößertem Maßstab deutlich zeigt, ist diese Kontroll-Abfragestation (4) beispielsweise mit einem Dickensensor (28) ausgebildet. Dieser ist mit einer Rolle (38) ausgestattet, welche jeden ankommenden Ring (25) überrollt. Wird die vorgegebene Dicke eines Ringes (25) überschritten, beispielsweise wenn doch zwei doppelt liegende Ringe ausnahmsweise die Lichtschranke (2) passiert haben, dann löst der Sensor (28) den Vertikalschieber (5) aus, der durch eine pneumatische Funktionseinheit (32) in eine Auswurfstellung angehoben wird, d. h. die Ringe (25) über den Förderpin (17, 17a) hebt. Gleichzeitig werden Blasdüsen (6) aktiviert, welche das oder die vom Pin (17a) ausgehobenen Ringe (25a) so abblasen, daß sie in einen seitlichen Sammelbehälter (39) fallen.

Weiterhin ist im Abschnitt (B) der Bahn, z. B. Schleppkettenbahn (15), gemäß Figur 1 eine weitere Kontroll-Abfragestation (7) angeordnet. Diese weist z. B. eine Lichtschranke (24) zur Erfassung der ankommenden Ringe (25) vor der Vereinzelung (9) auf. Ein davon ausgehendes Steuersignal steuert weitere Arbeitstakte der Vereinzelungsbaugruppe (9). Hierfür ist der zweiten Kontroll-Abfragestation (7) eine dritte Kontroll-Abfragestation (8) mit beispielsweise ebenfalls einer Lichtschranke (26) zur Erfassung und Signalisierung eines Ringes (25) in der Vereinzelung (9) nachgeordnet.

Es ist erforderlich, daß die Transporteinrichtung, z. B. in Form einer Schleppkette (19), stets unter Spannung läuft, damit die Pinne (17) am jeweiligen Kettenglied (16) rechtwinklig ausgestreckt geführt werden. Zu diesem Zweck ist die Schleppkette (19) von einem Kettenspanner (27) beaufschlagt. Die Vorrichtung besitzt im übrigen ein Maschinengestell. Dieses setzt sich aus vertikalen Ständern (33) und Längsholmen (34 und 35) zusammen. Letzterer trägt eine Grundplatte, auf welcher der Antriebsmotor (36) für die Trommel (11) und eine Unterstützungskonstruktion für die Bahn, z. B. Schleppkettenbahn (15), angeordnet ist.

## Patentansprüche

1. Vorrichtung zum Vereinzeln und Fördern ringförmiger Werkstücke, insbesondere elastischer Ringe wie gummielastische Dichtringe, von einer Aufnahme- zu einer Abgabestation, **dadurch gekennzeichnet**, daß die Aufnahmestation eine in Rotation antreibbare Vorratstrommel (11) sowie eine Austragskammer (12) mit Vereinzelungsrampe (1) aufweist, mit der eine Transporteinrichtung (31) mit einer endlosen, um Antriebs- und Umlenkrollen (18) geführten Bahn wie Schleppkettenbahn (15) in Wirkverbindung steht, die mit einer Mitnehmerstifte (17) führenden Schleppkette (19) versehen ist, wobei im Verlauf der Schleppkettenbahn (15) ein oder mehrere Kontroll-Abfragestationen (4, 7, 8) zur Kontrolle der vereinzelt transportierten Ringe (25) vorgesehen sind.

2. Vorrichtung nach Anspruch 1, **dadurch gekennzeichnet**, daß am oberen Ende der Rampe (1) eine quer dazu verlaufende Kontrolleinrichtung, z. B. Lichtschranke (2), und ein von dieser aktivierbarer Abwerfer (3) angeordnet sind.

3. Vorrichtung nach Anspruch 1 oder 2, **gekennzeichnet durch**
- eine Vorratstrommel (11), die beidseits offen ausgebildet ist und um eine schräg-abwärts geneigte Rotationsachse (y-y) rotierbar angetrieben ist,
- eine an die Austragsseite der Trommel (11) an deren zur Rotationsachse (y-y) senkrechten Ebene (x-x) feststehend anschließende, nach oben offene Austragskammer (12) mit einer einen Führungsschlitz (13) aufweisenden zur Ebene (x-x) parallelen Rückwand (14),
- eine im oberen Bereich der Rückwand (14) an dem Führungsschlitz (13) in Transportrichtung von unten nach oben stetig vorspringende Vereinzelungsrampe (1),
- in gleichen Abständen an jeweils einem Kettenglied (16) der Schleppkette (19) nach außen senkrecht abstehend angeordnete Mitnehmerstifte bzw. Pinne (17),
- eine dem Obertrum der Schleppkette (19) zugeordnete Schlitzführung (20) mit Führungsschlitz (13) für die mit exaktem Überstand (Ü) zumindest im Bereich der Rampe (1) hindurchragend geführten Pinne (17),
- eine das Obertrum der Kette (19) im exakten Abstand von der Schlitzführung (20) führende Schienenunterlage (21).

4. Vorrichtung nach einem oder mehreren der Ansprüche 1 bis 3, dadurch gekennzeichnet, daß die Kontroll-Abfragestation (4) mit Aushubschieber (5) und Abblasdüsen (6) zum Ausscheiden von doppelt liegenden Ringen ausgerüstet ist.

5. Vorrichtung nach einem oder mehreren der Ansprüche 1 bis 4, dadurch gekennzeichnet, daß im Bereich des horizontalen Transports der Transportbahn (15) eine zweite Kontroll-Abfragestation (7) mit einer Kontrolleinrichtung, z. B. einer Lichtschranke (24), der Kontroll-Abfragestation (4) in Transportrichtung nachgeordnet ist.

6. Vorrichtung nach Anspruch 5, dadurch gekennzeichnet, daß der zweiten Kontroll-Abfragestation (7) eine dritte Kontroll-Abfragestation (8) mit einer Kontrolleinrichtung, z. B. einer Lichtschranke (26), nachgeordnet ist.

7. Vorrichtung nach einem oder mehreren der Ansprüche 1 bis 6, dadurch gekennzeichnet, daß am Ende (23) der Transporteinrichtung (31) der Transportbahn (15) eine Vereinzelungsbaugruppe (9) vor der Abgabestation (22) angeordnet ist.

8. Vorrichtung nach einem oder mehreren der Ansprüche 1 bis 7, dadurch gekennzeichnet, daß die Schleppkette (19) einen Kettenspanner (27) aufweist.

9. Vorrichtung nach einem oder mehreren der Ansprüche 1 bis 8, dadurch gekennzeichnet, daß die erste Kontroll-Abfragestation (4) mit einem Dickensensor (28) ausgestattet ist.

10. Vorrichtung nach einem oder mehreren der Ansprüche 1 bis 9, dadurch gekennzeichnet, daß die Bahn der Finger (17) durch die Rückwand der Schleppkettenbahn (15) mit seitlichem Versatz neben der Welle (10) der Vorratstrommel (11) verläuft.
